# EUROPÄISCHE PATENTSCHRIFT

(11) **EP 0 533 098 B1**
(45) Veröffentlichungstag und Bekanntmachung des Hinweises auf die Patenterteilung: **26.02.1997**
(21) Anmeldenummer: 92115726.9
(22) Anmeldetag: 15.09.1992
(51) Int. Cl.: H04B 7/00, H05K 11/02

(54) **Steuerung eines Gerätes durch Abfrage von Bedienelementen mittels Microcomputer, vorzugsweise für Autoradio**
Control of an apparatus by actuator check via microcomputer, especially for car radio
Contrôle d'appareil avec appel d'éléments de commande par micro-ordinateur, spécialement pour autoradio

(30) Priorität: 18.09.1991 DE 4131052
(43) Veröffentlichungstag der Anmeldung: 24.03.1993
(73) Patentinhaber: Blaupunkt-Werke GmbH, D-31132 Hildesheim (DE)
(72) Erfinder: Henze, Werner, W-3053 Hohnhorst (DE)

(56) Entgegenhaltungen:
- EP-A- 0 116 780
- DE-A- 3 401 844
- FR-A- 2 547 460

## Beschreibung

Die Erfindung betrifft eine Einrichtung nach dem Oberbegriff des Anspruchs 1.

Zur Steuerung von Geräten, insbesondere nachrichtentechnischen Geräten, wie beispielsweise Autoradios, werden häufig Mikrocomputer verwendet, welche die Stellung mehrerer Bedienelemente abfragen und in dem Gerät vorgesehene Stellglieder entsprechend steuern. Dabei werden die durch die Verwendung eines Mikrocomputers gegebenen Möglichkeiten häufig im Sinne einer "intelligenten" Bedienung ausgenutzt. So wird beispielsweise häufig geprüft, ob der jeweils mit dem Bedienelement eingegebene Befehl bei dem jeweiligen Betriebszustand des Gerätes auch sinnvoll ist. Außerdem ist eine Belegung der einzelnen Bedienelemente in Abhängigkeit vom Betriebszustand möglich. Ferner kann durch Unterscheidung von verschieden langen Betätigungszeiten eine Mehrfadhnutzung von Bedienelementen erfolgen.

Die für die bekannten Einrichtungen erforderlichen Programme sind relativ komplex. Schon geringste Änderungen, wie beispielsweise eine andere Gestaltung des Bedienteils oder die Aufnahme einer zusätzlichen Funktion in das Gerät, erfordern eine Neuentwicklung des jeweiligen Programms.

Aus der EP 0 116 780 A 1 ist ein Autoradio bekannt, bei dem ein abnehmbares Frontteil den Diebstahl des Autoradios erschweren soll. Bei aufgestecktem Frontteil sind die einzelnen Bedienelemente des Frontteils über Gleichstromkreise und einer Matrix mit einem Mikrocomputer verbunden. Der Mikrocomputer fragt in Abhängigkeit von der Stellung der einzelnen Bedienelemente deren Status ab und steuert die entsprechenden Betriebszustände des Autoradios. Zur Erfassung der Stellung ist für jedes Bedienelement ein Gleichstromkreis vorgesehen.

Aufgabe der vorliegenden Erfindung ist es, eine Einrichtung zur Steuerung eines Gerätes vorzuschlagen, welche für die verschiedensten Geräte verwendbar ist und welche an das jeweilige Gerät bzw. an den jeweiligen Gerätetyp in einfacher Weise angepaßt werden kann.

Die Einrichtung mit den erfindungsgemäßen Merkmalen des Hauptanspruchs hat den Vorteil, daß eine einfache Anpassung an verschiedene Geräte leicht möglich ist, insbesondere ohne die Grundstruktur des in der Einrichtung vorhandenen Programms zu ändern. Dieser Vorteil macht sich insbesondere dann bemerkbar, wenn ein bestehender Gerätetyp durch Weiterentwicklung um einzelne Funktionen ergänzt werden soll oder wenn ebenfalls im Rahmen einer Weiterentwicklung, beispielsweise die Bedienbarkeit verbessert werden soll.

Mit der erfindungsgemäßen Einrichtung sind ferner eine Erhöhung der Anzahl der gleichzeitig ablaufenden Funktionen und eine Speicherplatzeinsparung im Nur-Lese-Speicher des Mikrocomputers möglich. Außerdem lassen sich Fehler leichter erkennen und beheben.

Durch die in den Unteransprüchen aufgeführten Maßnahmen sind vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:

- Fig. 1: ein Flußdiagramm für einen in der erfindungsgemäßen Einrichtung verwendeten Mikrocomputer im Fall einer manuellen Eingabe,
- Fig. 2: ein Flußdiagramm für eine automatische Eingabe und
- Fig. 3: ein Blockschaltbild einer erfindungsgemäßen Einrichtung.

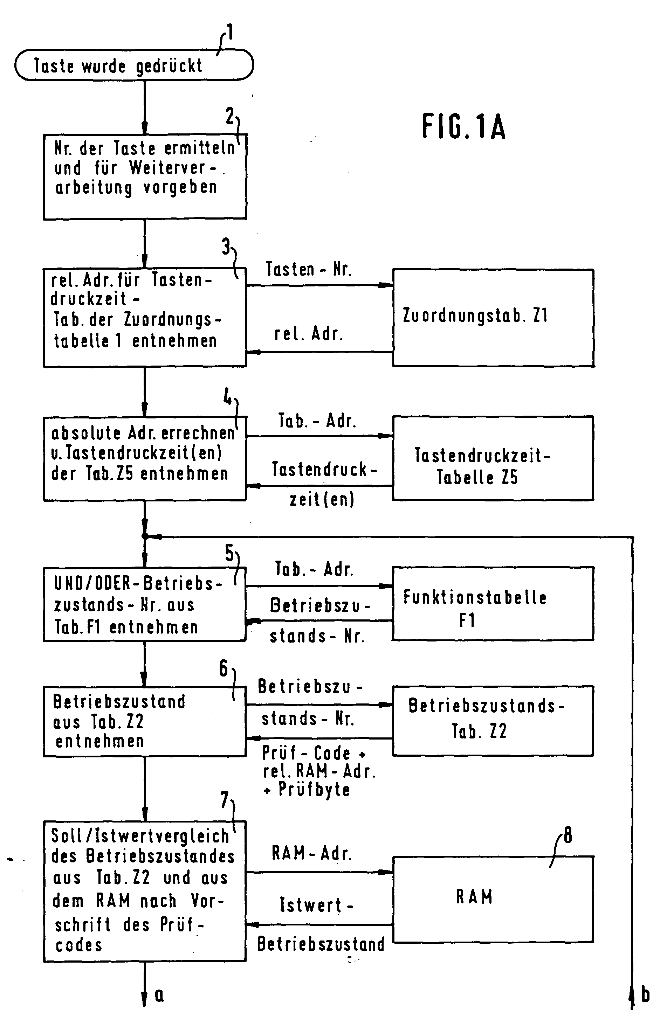

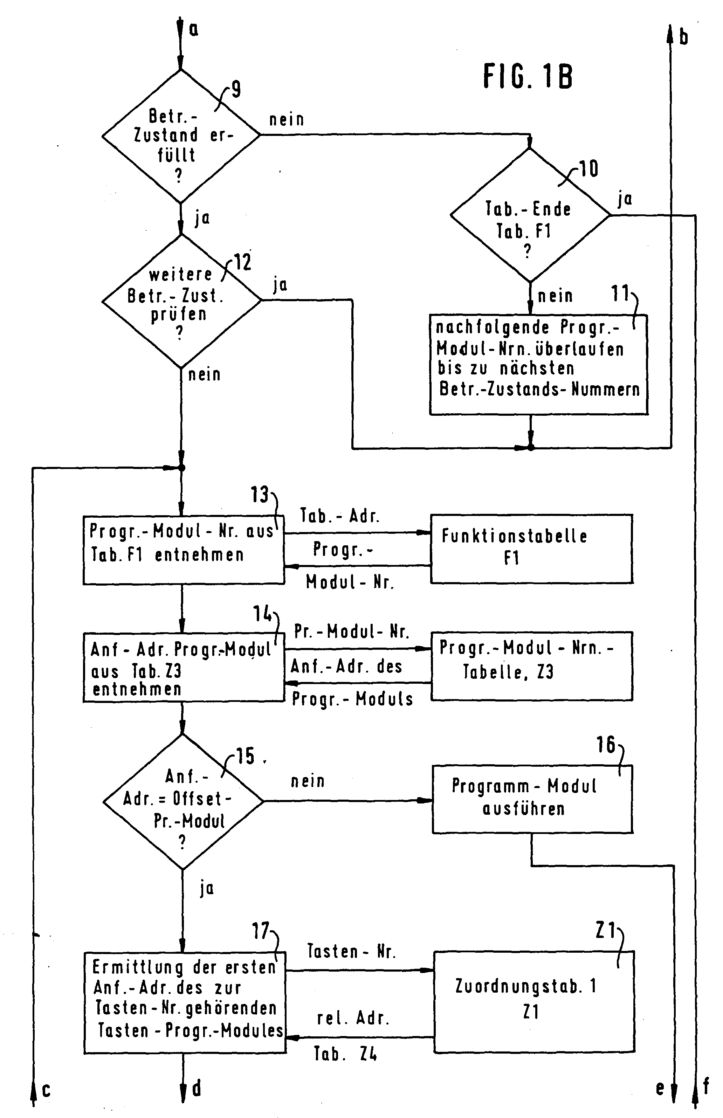

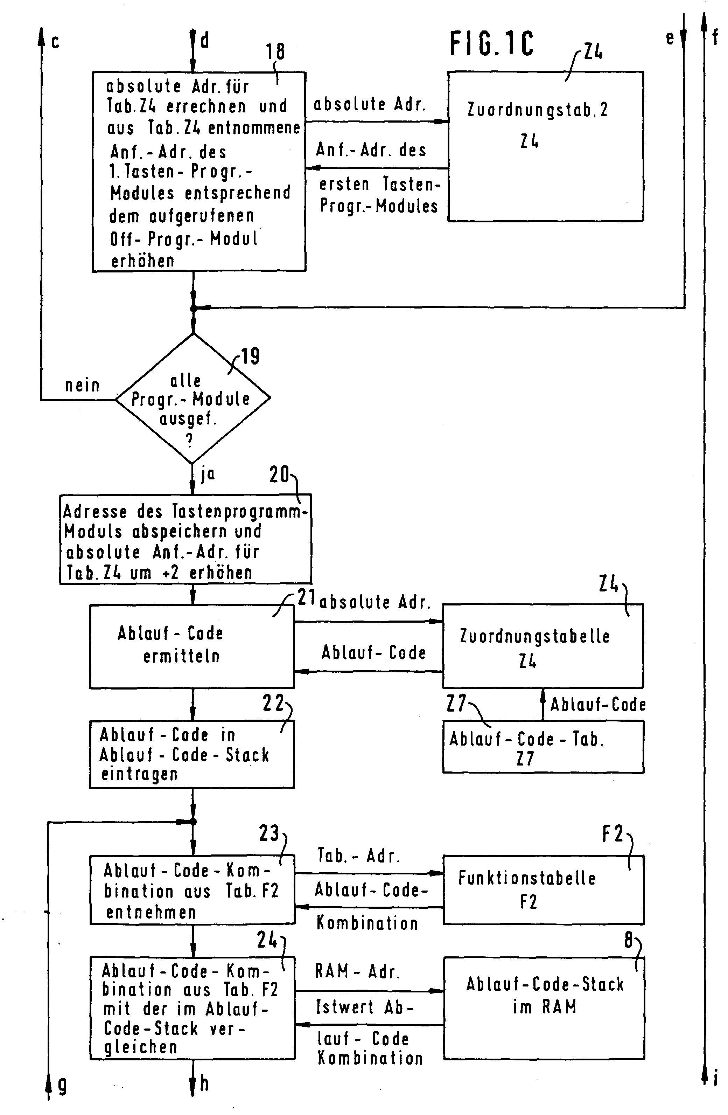

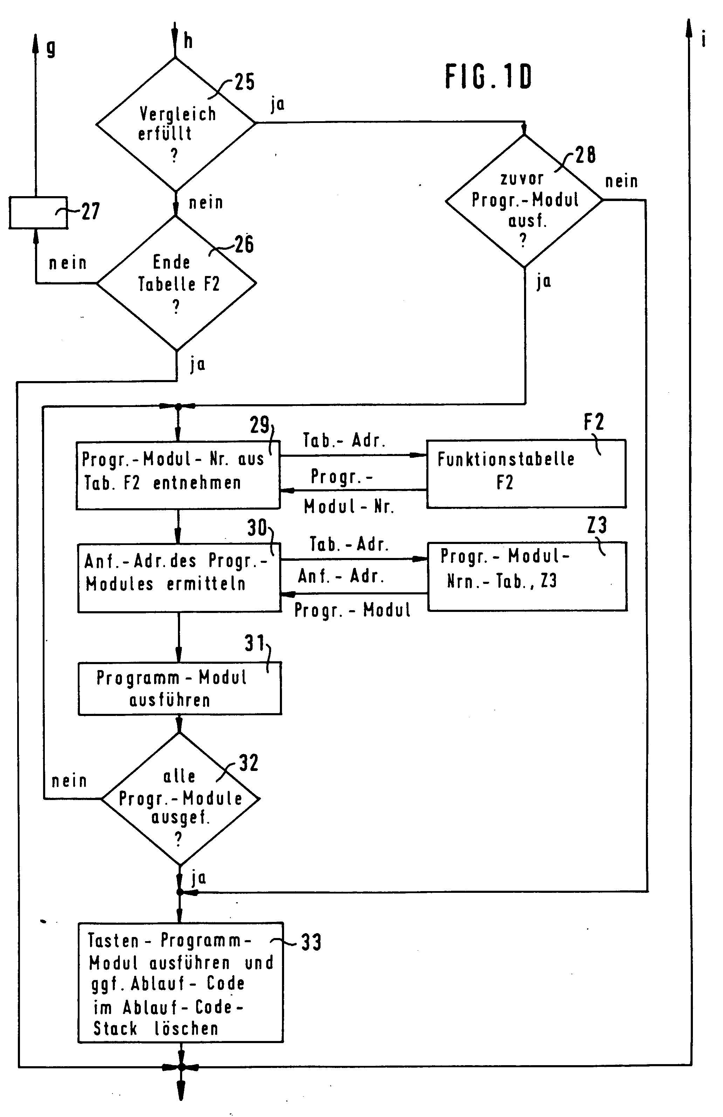

Wegen des Umfangs des Flußdiagramms wurde Fig. 1 als Fig. 1A bis Fig. 1D auf mehrere Blätter verteilt, wobei zusammengehörende Linien gleichlautend mit a bis i bezeichnet wurden.

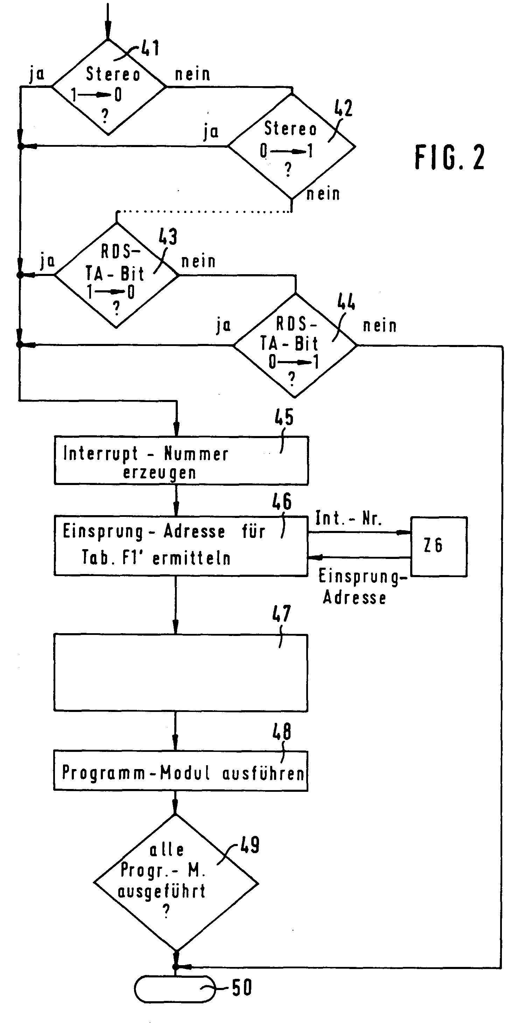

Im Rahmen der Erfindung ist zwar die Verwendung verschiedener Bedienelemente möglich. In der Beschreibung der Ausführungsbeispiele wird jedoch von Tasten ausgegangen, da diese in den meisten Fällen am zweckmäßigsten sind. Bei dem Ausführungsbeispiel mit den Programmabläufen nach den Figuren 1 und 2 werden folgende Tabellen benutzt, die in einem Nur-Lese-Speicher abgelegt sind. Dabei wird unter einer relativen Adresse die Adresse innerhalb einer Tabelle verstanden, während die absolute Adresse auf den gesamten Nur-Lese-Speicher bezogen ist. Die absolute Adresse ergibt sich durch Addition der Anfangsadresse der jeweiligen Tabelle zur relativen Adresse.

### Zuordnungstabelle Z1

In dieser Tabelle sind pro Taste (Tastennummer) die Anzahl und die relative Adresse von Tastendruckzeiten sowie relative Adressen für die Zuordnungstabelle Z4 abgelegt.

### Betriebszustandstabelle Z2

Diese Tabelle enthält die Zuordnung von Betriebszustandsnummern zu Betriebszuständen.

### Programm-Modul-Tabelle Z3

Zuordnung von Programm-Modul-Nummern zu den Anfangsadressen der Programm-Module.

### Zuordnungstabelle Z4

Zuordnung von Anfangsadressen jeweils einer Gruppe von Tasten-Programm-Modulen sowie des dazugehörigen Ablauf-Codes zu den Tastennummern.

### Tastendruckzeittabelle Z5

Angabe von in Tabelle Z1 benutzten Tastendruckzeiten.

### Zuordnungstabelle Z6

Zuordnung der Anfangsadressen von Adreß-Offset-Programm-Modulen zu den Anfangsadressen der Tasten-Programm-Module in Tabelle Z4.

### Ablauf-Codetabelle Z7

Zuordnung von Ablauf-Codes zu den in der Zuordnungstabelle Z4 enthaltenen Anfangsadressen von Tasten-Programm-Modulen.

### Einsprung-Adressen-Tabelle Z8

Ordnet Interrupt-Nummern jeweils einer Einsprung-Adresse zur Verarbeitung automatischer Eingaben zu.

### Funktionstabelle F1

Diese Tabelle enthält Betriebszustandsnummern und Programm-Modul-Nummern.

### Funktionstabelle F1'

Diese Tabelle enthält Betriebszustandsnummern und Programm-Modul-Nummern für automatische Eingaben.

### Funktionstabelle F2

Diese Tabelle enthält im wesentlichen Ablauf-Code-Kombinationen.

Im folgenden wird der Aufbau einiger dieser Tabellen erläutert:

### Aufbau der Zuordnungstabelle Z1

Jeder Tabellenabschnitt enthält 2 Bytes und ist einer Tastennummer zugeordnet.

| | | |
|---|---|---|
| 1. Byte | x x x x | x x x x |
| | Anzahl | relative Adr. |
| | Tastendruckzeiten | Tastendruckzeit-Tabelle |

- Anmerkung:: Anzahl Tastendruckzeiten werden nur bei TZEIT = 1 ausgewertet!

| | | |
|---|---|---|
| 2. Byte | x x x x | x x x x |

relative Adressen für Zuordnungstabelle 2.

Der in der Zuordnungstabelle Z1 angegebene Wert = 1/3 der relativen Adresse.

### Aufbau der Betriebszustands-Tabelle Z2

In der Tabelle Z2 sind alle benötigten Betriebszustände aufgelistet. Jedem Betriebszustand wird mit einer EQU-Anweisung eine Betriebszustands-Nummer zugeordnet.

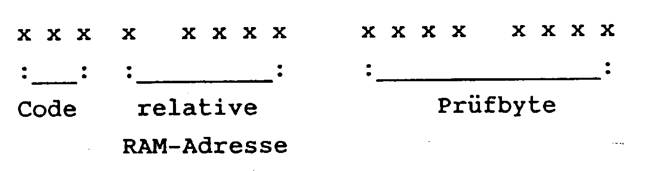

Jeder Betriebszustand enthält eine Angabe über einen Soll- und Istwert sowie einen Prüfcode. Der Sollwert wird durch das Prüfbyte dargestellt. Der Istwert steht im RAM und wird mit Hilfe der relativen Adressenangabe gefunden. Mit dem Prüfcode eines jeden Betriebszustandes wird vorgegeben, welcher Bedingung Soll- und Istwert genügen müssen, damit der Betriebszustand als erfüllt betrachtet werden kann. Die relative Adresse des Istwertes wird gebildet, indem von der absoluten RAM-Adresse ein "Adressen-Offsetwert" (ROFS) abgezogen wird,
z. B. ROFS EQU $60 bei Motorola-µC HC11-F1

Dieser Adressen-Offsetwert kann auch vom Prüfcode abgezogen werden. Das hat den Vorteil, daß in der Betriebszustands-Tabelle die absoluten RAM-Adressen verwendet werden können. Die zu benutzenden Prüfcodes sind dann:

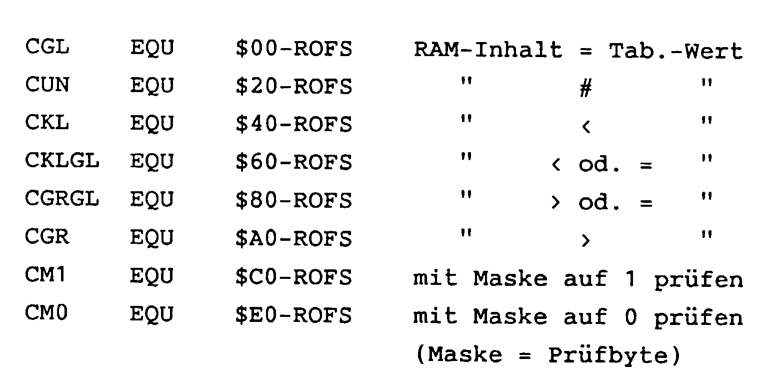

### Aufbau der Programm-Modul-Tabelle Z3

Die Anfangs-Adressen aller Programm-Module, die in den Tabellen F1 und F2 benutzt werden, sind in der Tabelle Z3 aufgeführt. Jeder Adresse wird mit einer EQU-Anweisung eine Programm-Modul-Nummer zugeordnet, die dann in den Funktionstabellen das entsprechende Programm-Modul repräsentiert.

Es ist auch zur Verkürzung der Funktionstabellen möglich, den wiederkehrenden Folgen von Programm-Modul-Nummern weitere Nummern "Programm-Modulfolge-Nummern" zuzuordnen, die dann ähnlich den Programm-Modul-Nummern in den Funktionstabellen benutzt werden.

### Aufbau der Funktionstabelle F1

Der folgende Aufbau der Tabelle F1 zeigt, wie die Betriebszustands- und Programm-Modul-Nummern benutzt werden. Die Tabelle F1 ist in Abschnitte aufgeteilt, die einem bestimmten Wellenbereichs- und Gerätezustand zugeordnet sind. Ein momentaner Ist-Zustand im KAM ist z. B.:

| | | | | | | | | |
|---|---|---|---|---|---|---|---|---|
| x | 0 | 0 | 1 | | x | 0 | 0 | 1 |
| - | L | M | U | | - | CD | CAS | RA |

Wenn der in der Tabelle F1 angegebene Stand des Bytes mit dem im RAM nicht übereinstimmt, wird entweder mit einem weiteren in der Tabelle vorgegebenen anderen Wellenbereichs- und Gerätestand fortgefahren oder nichts ausgeführt. Wenn mehrere Wellenbereiche oder Geräte mit einer "1" in der Tabelle markiert sind, besteht eine entsprechende ODER-Verknüpfung.

Desweiteren wird zur Ausführung von Programm-Modulen vorausgesetzt, daß die angegebenen Betriebszustände erfüllt sind. Die Anordnung der Betriebszustands-Nummern und Programm-Modul-Nummern bzw. Programm-Modulfolge-Nummern in Verbindung mit den Steuerzeichen zeigt der folgende Tabellenaufbau:

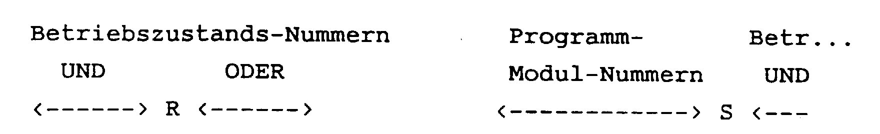

R u. S sind Steuerzeichen und werden zur Abarbeitung der Tabellen benötigt.

Alle Betriebszustände sind erfüllt, wenn alle UND-verknüpften Betriebszustände und mindestens ein ODER-verknüpfter Betriebszustand nach entsprechender Prüfung in der Tabelle und im RAM Übereinstimmung zeigen. Wenn kein UND-Betriebszustand in der Tabelle angegeben ist, muß mindestens ein ODER-verknüpfter Betriebszustand erfüllt sein. Wenn kein ODER-verknüpfter Betriebszustand angegeben ist, müssen alle UND-verknüpften Betriebszustände erfüllt sein. Wie das folgende Beispiel zeigt, können auch verschiedene UND-verknüpfte Betriebszustände über eine ODER-Verbindung aneinandergereiht werden.

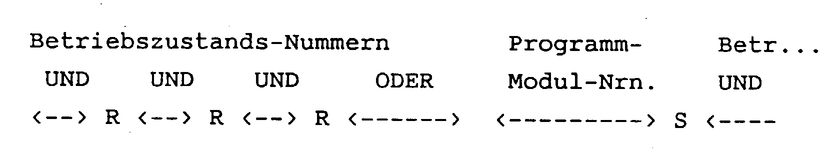

In diesem Fall werden die UND-verknüpften Betriebszustände als erfüllt angesehen, wenn mindestens eine Gruppe von UND-verknüpften Betriebszuständen erfüllt ist. Nachfolgend ist die Bedeutung der Steuerzeichen R und S angegeben:

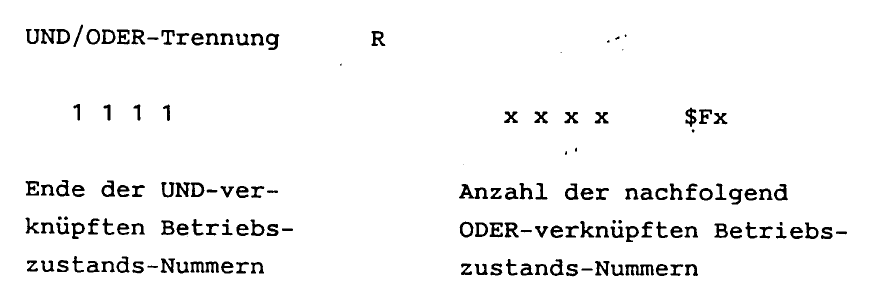

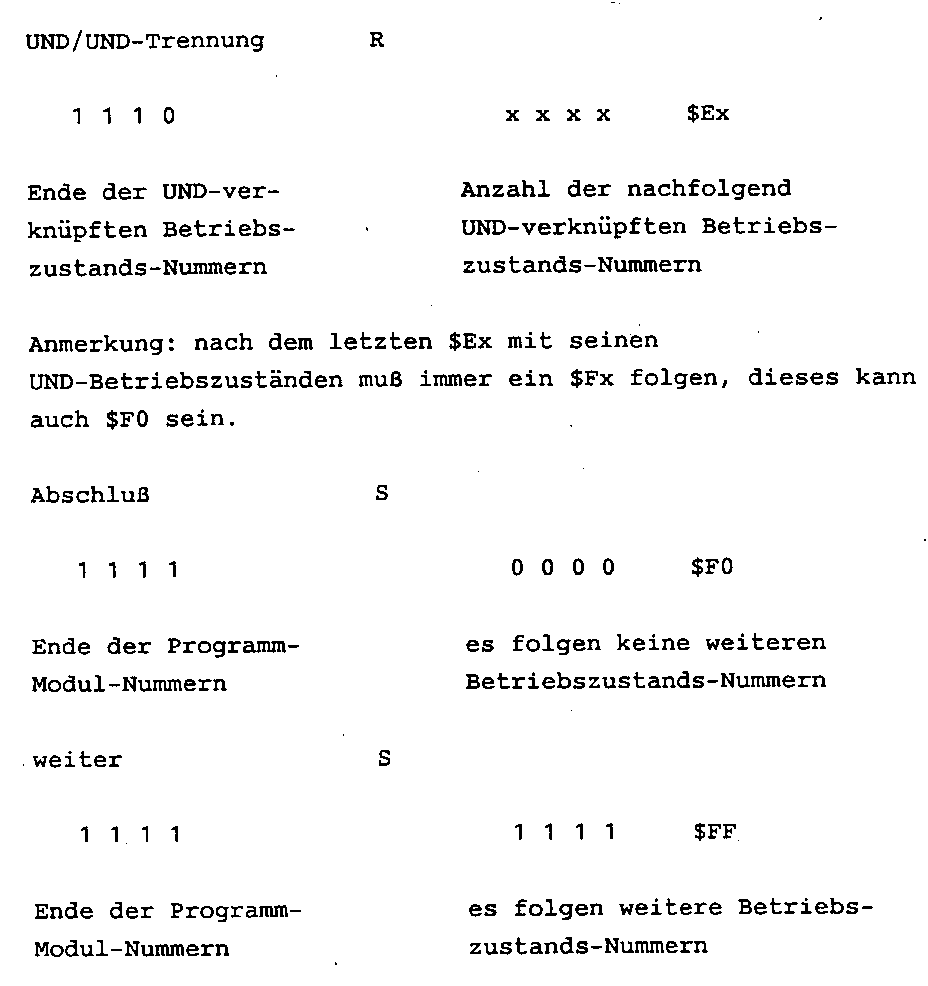

Es sind 223 ($DF) verschiedene Betriebszustands-Nummern und 239 ($EF) verschiedene Programm-Modul-Nummern möglich.

Zum Beispiel werden als UND-Bedingung Kombinationen von Tastenflags (Tastendruckdauer, gleiche Taste wie zuvor) benutzt, die in der Tabelle als Betriebszustands-Nummer enthalten sind. Als ODER-Bedingung sind alle Tasten angegeben, mit denen dasselbe Tasten-Programm-Modul aufrufbar ist.

Wie später im Zusammenhang mit Fig. 1 noch näher beschrieben wird, erfolgt, wenn alle Betriebszustände erfüllt sind, über eine Programm-Modul-Nummer der Aufruf eines Programm-Moduls ("Adreß-Offset-Programm-Modul"), mit dem ermittelt wird, welche Funktion ausgeführt werden soll. Dazu muß die richtige Adresse des Tasten-Programm-Moduls ermittelt werden. Ausgehend von der Tasten-Nummer wird der Tabelle Z1 die entsprechende relative Adresse für Tabelle Z4 entnommen und die absolute Adresse errechnet. Unter der errechneten Adresse in Tabelle Z4 stehen Anfangs-Adressen von Tasten-Programm-Modulen.

Die Anfangs-Adresse des richtigen Tasten-Programm-Moduls wird nun entsprechend der Tabelle Z6 gefunden, indem mit dem Adreß-Offset-Programm-Modul aus Tabelle F1 die Anfangs-Adresse des ersten Tasten-Programm-Moduls aus Tabelle Z4 erhöht wird. Nachdem die Anfangs-Adresse des auszuführenden Tasten-Programm-Moduls gefunden wurde, wird diese zur möglichen späteren Verwendung abgespeichert und mit der Tabelle F2 geprüft,
- ob die neue Funktion bei dem momentanen Funktionsstand des Gerätes ausgeführt werden darf oder nicht und
- ob vor Ausführung der neuen Funktion noch andere Programm-Module ausgeführt werden müssen.

Um die Funktionen tabellarisch erfassen zu können, müssen ihnen ebenfalls Nummern zugeordnet werden. Die Nummern werden nachfolgend "Ablauf-Code" genannt. Sie sind in der Tabelle Z7 festgelegt und in Tabelle Z4 den Anfangs-Adressen der Tasten-Programm-Module zugeordnet. Gleichartige Funktionsabläufe, z. B. Hören mit der Stationstaste 1, 2, 3..., können den gleichen Ablauf-Code erhalten. Der in der Tabelle Z4 auf die Anfangs-Adresse des richtigen Tasten-Programm-Moduls folgende Ablauf-Code wird in einen Ablauf-Code-Stack eingetragen. Es ist damit zu jeder Zeit bekannt, welche Funktionen der Empfänger gerade ausführt. Die nachfolgende Darstellung zeigt, daß die ermittelten Ablauf-Codes unter Positions-Nummern im Ablauf-Code-Stack abgelegt werden.

### Ablauf-Code-Stack

| Ablauf-Code | Positions-Nr. |
|---|---|
| xxxx xxxx | 1 |
| xxxx xxxx | 2 |
| xxxx xxxx | 3 |
| xxxx xxxx | 4 |
| xxxx xxxx | 5 |
| xxxx xxxx | 6 |

### Aufbau der Funktionstabelle F2

In der Tabelle F2 sind alle zulässigen Ablauf-Code-Kombinationen angegeben. Auf diese Weise werden Fehlfunktionen ausgeschlossen, denn diese können nicht ausgeführt werden. Um die Prüfung zu verkürzen, wurde die Tabelle F2 in Abschnitte unterteilt. Die Anzahl der Abschnitte richtet sich nach der Anzahl der möglichen Ablauf-Codes im Ablauf-Code-Stack. Die Ordnung der in der Tabelle F2 eingetragenen Ablauf-Codes erfolgt nach der Positions-Nummer im Ablauf-Code-Stack und ist nach folgendem Schema aufgebaut:

| Positions-Nr. im Stack | |
|---|---|
| 2 + 1, 1, 1 ... | wenn 2 Ablauf-Codes |
| 2 + 3 + 1, 1, 1 ... | " 3 " |
| 2 + 3 + 4 + 1, 1, 1 ... | wenn 4 Ablauf-Codes im Stack |
| usw.. | |

Die Kommata sind bei dem dargestellten Schema als "Oder" zu betrachten. Die Ablauf-Codes einer Reihe mit der Positions-Nr. 1 sind untereinander verschieden und stellen die möglichen Ablauf-Code-Kombinationen mit den Ablauf-Codes ab Positions-Nr. 2 im Ablauf-Code-Stack dar.

Ablauf-Code-Zahlen sind in den Grenzen von 1 bis 111 erlaubt. Die Einschränkung ist wegen der Steuerzeichen bzw. Steuerbits in der Tabelle F2 notwendig. In der Tabelle ist zur Kennung des Ablauf-Codes mit der Positions-Nummer 2 das MS-Bit = 1 gesetzt.

| | | | |
|---|---|---|---|
| A2 | EQU | $80 | Kenn-Bit Ablauf-Code Pos.-Nr. 2 |

Es ist vorgesehen, in die Tastenausführungs-Tabelle Steuerzeichen einzufügen. Diese Zeichen haben folgende Bedeutung:

| | | | |
|---|---|---|---|
| ENDA | EQU | $F0 | Ende des Tastenausführungs-Tabellen-Abschnitts |

Einem oder einer Gruppe von Ablauf-Codes mit der Positions-Nummer 1 können Programm-Modul-Nummern bzw. Programm-Modulfolge-Nummern vorangestellt werden. Wenn die Ablauf-Code-Kombination im Ablauf-Code-Stack mit der in der Tabelle F2 übereinstimmt, werden gegebenenfalls zuerst die Programm-Module und anschließend das Tasten-Programm-Modul ausgeführt. Die folgenden Steuerzeichen bewirken, daß die angegebenen Programm-Modul-Nummern für alle nachfolgenden Ablauf-Code-Kombinationen des Tabellenabschnittes Gültigkeit haben. Die Anzahl der Programm-Modul-Nummern ist im Steuerzeichen selbst enthalten.

| Symbol in Tabelle | | Steuerzeichen | Anzahl Programm-Modul-Nummern |
|---|---|---|---|
| MX1 | EQU | $F1 | 1 |
| MX2 | EQU | $F2 | 2 |
| MX3 | EQU | $F3 | 3 |
| MX4 | EQU | $F4 | 4 |
| MX5 | EQU | $F5 | 5 |

Mit den folgenden Steuerzeichen kann die Wirkung der Steuerzeichen MX1 bis MX5 wieder aufgehoben werden.

| | | | | | |
|---|---|---|---|---|---|
| MY1 | EQU | $F6 | MY1 | löscht | MX1 |
| MY2 | EQU | $F7 | MY2 | " | MX2 |
| MY3 | EQU | $F8 | MY3 | " | MX3 |
| MY4 | EQU | $F9 | MY4 | " | MX4 |
| MY5 | EQU | $FA | MY5 | " | MX5 |

Bei den folgenden Steuerzeichen haben die angegebenen Programm-Modul-Nummern nur für die nächste Ablauf-Code-Kombination Gültigkeit.

| Symbol in Tabelle | | Steuerzeichen | Anzahl Programm-Modul-Nummern |
|---|---|---|---|
| MZ1 | EQU | $FB | 1 |
| MZ2 | EQU | $FC | 2 |
| MZ3 | EQU | $FD | 3 |
| MZ4 | EQU | $FE | 4 |
| MZ5 | EQU | $FF | 5 |

Wenn die Ablauf-Code-Kombination im Ablauf-Code-Stack und in der Tabelle F2 übereinstimmen, wird nach eventuell zuvor auszuführenden Programm-Modulen das Tasten-Programm-Modul ausgeführt. Damit ist die Reaktion des Gerätes auf den Tastendruck durchgeführt, aber nicht in jedem Fall beendet, wie z. B. bei Travel-Store. Hier bleibt der zu Travel-Store gehörende Ablauf-Code solange im Ablauf-Code-Stack, bis die Funktion abgeschlossen ist.

Bei den Eingaben wird zwischen automatischen und manuellen Eingaben unterschieden. Manuelle Eingaben erfolgen mit den Bedienelementen des Gerätes und werden nach dem in Fig. 1 dargestellten Flußdiagramm bearbeitet. Automatische Eingaben sind Signale, die ohne manuelle Eingaben entstehen, wie beispielsweise eine Stereo-Kennung, Verkehrsfunk-Kennungen, Signale (Bandende) von Kassetten- und CD-Geräten. Diese Signale werden in einer Interrupt-Routine überwacht, wobei ihnen jeweils eine "Interrupt-Nummer" zugeordnet wird. Jede Änderung eines dieser Signale löst eine entsprechende Interrupt-Funktion aus. Weil sich die automatischen Eingaben in kurzer Zeit häufen können, ist ein Interrupt-Stack vorgesehen, in dem die noch zu verarbeitenden Interrupt-Nummern zwischengespeichert werden. Die Eintragung im Interrupt-Stack erfolgt entsprechend der Priorität, die der Interrupt-Funktion zugeordnet wurde. Ein Flußdiagramm zur Verarbeitung von automatischen Eingaben ist in Fig. 2 dargestellt.

Nachdem bei 1 (Fig. 1) eine Taste gedrückt wurde, wird im Programmteil 2 die Nummer dieser Taste ermittelt und für die Weiterverarbeitung vorgegeben. Das Ermitteln der Tastennummern ist an sich bekannt und kann beispielsweise durch Interrupt-Routinen oder Tastenabfrage-Programme erfolgen. Im Programmteil 3 wird die Tastennummer als Adresse der Zuordnungstabelle Z1 zugeführt und aus der Zuordnungstabelle Z1 die relative Adresse für die Tastendruckzeittabelle Z5 ausgelesen. Im Programmteil 4 wird dann zunächst die absolute Adresse für die Tastendruckzeittabelle Z5 errechnet. Danach werden je nach Funktion der einzelnen Tasten eine oder mehrere Tastendruckzeiten der Tabelle Z5 entnommen.

Der Zählerstand eines in Fig. 1 nicht dargestellten Zeitzählers, der den Istwert der Tastendruckzeit enthält, wird mit der aus der Tabelle Z5 ausgelesenen Tastendruckzeit verglichen, so daß nach dem Loslassen der Taste feststeht, für welche Tastendruckzeit die Taste gedrückt wurde. Zur Kennung des Istbetriebszustandes werden entsprechend Flag's im RAM gesetzt.

Mit dem Programmteil 5 wird die Funktionstabelle F1 angesprochen. Dieser Programmteil und die folgenden dienen dazu, Soll- und Istbetriebszustände (Tastennummer und Tastendruckzeit) zu vergleichen. Dazu wird im Programmteil 5, mit einer ersten Tabellenadresse beginnend, jeweils eine Betriebszustandsnummer ausgelesen. Der zu der ausgelesenen Betriebszustandsnummer gehörende Betriebszustand wird mit Hilfe des Programmteils 6 der Tabelle Z2 entnommen.

Die der Tabelle Z2 entnommenen Daten beinhalten einen Prüfcode, eine relative RAM-Adresse sowie ein Prüfbyte. Das Prüfbyte wird im Programmteil 7 mit einem Byte im Schreib-Lese-Speicher (RAM) 8 des Mikrocomputers verglichen. Der Prüfcode besagt dabei, welcher Bedingung das Prüfbyte und das zu vergleichende Byte genügen müssen, damit der Betriebszustand als erfüllt betrachtet werden kann. Die relative RAM-Adresse kennzeichnet nach Hinzufügen eines Adreß-Offset-Wertes die Adresse, unter welcher das zu vergleichende Byte im Schreib-Lese-Speicher 8 abgelegt ist.

Die Funktionstabelle F1 enthält unter jeweils einer Adresse eine oder mehrere Betriebszustandsnummern, Angaben, wie die Ergebnisse des im Programmteil 7 durchgeführten Soll/Ist-Vergleichs der einzelnen Betriebszustandsnummern zu verknüpfen sind, und Programm-Modul-Nummern. Letztere werden später erläutert.

Ist für einen Betriebszustand der bei 7 durchgeführte Vergleich nicht erfüllt, wird nach der Verzweigung 9 das Programm bei 10 in Abhängigkeit davon fortgesetzt, ob das Ende der Tabelle F1 erreicht ist. Ist dieses der Fall, so wird auch das Programm beendet. Ist jedoch das Tabellenende noch nicht erreicht, werden im Programmteil 11 die nachfolgenden Programm-Modul-Nummern überlaufen bis zu den nächsten Betriebszustandsnummern. Das Programm wird dann beim Programmteil 5 wiederholt.

Wird jedoch festgestellt, daß beim Soll/Ist-Vergleich 7 ein Betriebszustand erfüllt ist, wird das Programm bei 12 in Abhängigkeit davon verzweigt, ob weitere Betriebszustände zu prüfen sind. Ist dieses der Fall, so beginnt diese Prüfung mit dem Programmteil 5. Ist dieses nicht der Fall, so wird entsprechend dem Ergebnis im Programmteil 13 aus der Funktionstabelle F1 die zugehörige Programm-Modul-Nummer entnommen. Aus einer Tabelle Z3 wird anhand der Programm-Modul-Nummer die Anfangsadresse des Programm-Moduls im Programmteil 14 entnommen.

In einer Verzweigung 15 wird geprüft, ob die aus der Tabelle Z3 entnommene Anfangsadresse diejenige eines Adreß-Offset-Programm-Moduls ist. Ist dieses nicht der Fall, so wird das Programm-Modul im Programmteil 16 ausgeführt

Ist jedoch die aus der Tabelle Z3 entnommene Anfangsadresse die Adresse eines Adreß-Offset-Programm-Moduls, so folgt im Programmteil 17 die Ermittlung der ersten Anfangsadresse des zur Tastennummer gehörenden Tasten-Programm-Moduls. Dazu wird nochmals die Tabelle Z1 angesprochen. Da die aus der Tabelle Z1 entnommene Anfangsadresse eine relative Adresse ist, wird im Programmteil 18 für die folgende Verwendung der Tabelle Z4 die absolute Adresse berechnet und aus der Tabelle Z4 die Anfangsadresse des ersten Tasten-Programm-Moduls entsprechend dem aufgerufenen Adreß-Offset-Programm-Modul erhöht.

Danach verzweigt sich das Programm bei 19 in Abhängigkeit davon, ob alle Programm-Module ausgeführt sind. Solange dieses nicht der Fall ist, wird das Programm, beginnend mit dem Programmteil 13, wiederholt. Sind jedoch alle Programm-Module mit Ausnahme des Tasten-Programm-Moduls ausgeführt, wird die ermittelte Anfangsadresse des Tasten-Programm-Moduls zur möglichen späteren Verwendung abgespeichert und bei 20 die absolute Anfangsadresse für die Tabelle Z4 um +2 erhöht. Mit Hilfe des Programmteils 21 wird aus der Tabelle Z4 aufgrund der absoluten Anfangsadresse ein Ablauf-Code ausgelesen, der bei 22 in einen Ablauf-Code-Stack eingetragen wird.

Im Programmteil 23 wird eine Ablauf-Code-Kombination aus der Tabelle F2 entnommen, die bei 24 mit der jeweils im Ablauf-Code-Stack enthaltenen Kombination verglichen wird. Letztere wird aus dem Schreib-Lese-Speicher 8 ausgelesen. Ist der Vergleich nicht erfüllt, wird nach der Verzweigung 25 das Programm bei 26 nochmals verzweigt und bis zum Ende der Tabelle F2 wiederholt, wozu bei 27 die Tabellenadresse jeweils inkrementiert wird.

Ist der Vergleich bei 25 erfüllt, verzweigt sich das Programm bei 28 nochmals in Abhängigkeit davon, ob zuvor noch ein oder mehrere Programm-Module ausgeführt werden sollen. Ist dieses der Fall, so wird die Programm-Modul-Nummer im Programmteil 29 aus der Tabelle F2 entnommen und bei 30 aus der Tabelle Z3 aufgrund der Programm-Modul-Nummer die Anfangsadresse des Programm-Moduls ausgelesen. Danach wird im Programmteil 31 das Programm-Modul ausgeführt und anschließend bei 32 abgefragt, ob alle Programm-Module ausgeführt sind. Ist dieses nicht der Fall, so werden die Programmteile 29 bis 31 entsprechend wiederholt. Schließlich wird im Programmteil 33 das Tasten-Programm-Modul ausgeführt und gegebenenfalls der Ablauf-Code im Ablauf-Code-Stack gelöscht. Nach dem Programmteil 33 erfolgt ein Sprung in eine Leerlaufschleife bis durch eine Tasteneingabe ein neuer Programmablauf gestartet wird oder durch eine automatische Eingabe ein Interrupt ausgelöst wird.

Die mit der eingangs erfolgten Eingabe gewünschte Einstellung wird vorgenommen. Dieses kann beispielsweise die Einstellung eines anderen Senders oder einer anderen Signalquelle, die Einstellung einer anderen Verkehrsfunk-Betriebsart oder die Steuerung des Laufwerks eines Kassettenrekorders sein.

Bei dem in Fig. 2 dargestellten Programm zur Auswertung von automatischen Eingabesignalen erfolgt zunächst ein Interrupt mit einer Interrupt-Routine, bei welcher ermittelt wird, welche automatische Eingabe zur Auslösung des Interrupts geführt hat. Der Übersichtlichkeit halber sind beispielhaft nur vier Abfragen dargestellt, nämlich die Abfrage 41, ob die Stereokennung von 1 auf 0 gesprungen ist, die Abfrage 42, ob ein Sprung der Stereokennung von 0 auf 1 vorliegt, die Abfrage 43, ob das RDS-TA-Bit von 1 auf 0 gewechselt hat, und die Abfrage 44, ob das RDS-TA-Bit von 1 auf 0 geändert wurde. Abhängig vom Ergebnis der vorangegangenen Abfragen wird bei 45 eine Interrupt-Nummer erzeugt, mit deren Hilfe im Programmteil 46 aus der Einsprung-Adressen-Tabelle Z8 eine Einsprung-Adresse für die Tabelle F1' ausgelesen wird. Mit dem anschließenden Programmteil 47 wird die Funktionstabelle F1' in ähnlicher Weise abgearbeitet wie die Funktionstabelle F1 bei dem in Fig. 1 dargestellten Programm. Zur Vermeidung von Wiederholungen wird daher auf die Beschreibung der Programmteile 5 bis 14 (Fig. 1) hingewiesen, wobei anstelle der Funktionstabelle F1 die Funktionstabelle F1' tritt.

Da bei den automatischen Eingabesignalen eine Ausführung eines Tasten-Programm-Moduls nicht erforderlich ist, kann aufgrund der im Programmteil 14 ermittelten Anfangsadresse das entsprechende Programm-Modul bei 48 sofort ausgeführt werden. Danach wird bei 49 das Programm in Abhängigkeit davon verzweigt, ob alle Programm-Module mit den aus der Funktionstabelle F1' entnommenen Programm-Modul-Nummern ausgeführt wurden. Ist dieses nicht der Fall, wird das Programm 47 wiederholt. Anderenfalls erfolgt bei 50 ein Rücksprung in die Grundebene.

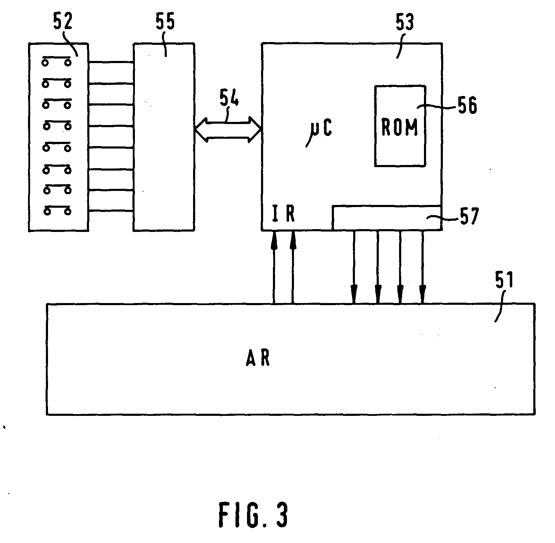

Fig. 3 zeigt als Blockschaltbild eine erfindungsgemäße Einrichtung mit einem Autoradio 51 und einem Bedienteil 52, das eine Vielzahl von Tasten aufweist. Zur Steuerung ist ein Mikrocomputer 53 vorgesehen. Da diese Baugruppen an sich bekannt sind, erübrigt sich eine Darstellung im einzelnen. Der Mikrocomputer ist über ein Bussystem 54 an eine Tastenabfrage-Einheit 55 angeschlossen. Außerdem verfügt der Mikrocomputer unter anderem über einen Nur-Lese-Speicher 56, in dem neben anderen Informationen die beschriebenen Tabellen abgelegt sind.

Über einen Ausgabeport 57 ist der Mikrocomputer 53 mit verschiedenen Steuereingängen des Autoradios, beispielsweise zur Abstimmung, zur Wellenbereichsumschaltung, zur Lautstärkeeinstellung und zur Bedienung von zusätzlichen Geräten, wie beispielsweise einem Kassettengerät, verbunden.

Mehrere Interrupt-Eingänge IR des Mikrocomputers 53 sind mit Ausgängen des Autoradios 51 verbunden, welche die bereits beschriebenen automatischen Eingabesignale führen.

## Patentansprüche

1. Einrichtung zur Steuerung eines nachrichtentechnischen Gerätes, vorzugsweise eines Autoradios, mit einem Mikrocomputer (53), einem Speicher (56), einem Bedienteil (52) mit Bedienelementen und mit Stellgliedern, wobei der Mikrocomputer (53) ausgebildet ist, mit einem im Speicher (56) abgelegten Programm die Stellung der Bedienelemente zu erfassen und die entsprechenden Funktionen der Einrichtung (51) zu steuern dadurch gekennzeichnet,
- daß das Programm eine Tabelle (F1) enthält, die Startinformationen von Programm-Modulen zur Steuerung der Stellglieder für alle möglichen Betriebszustände enthält, wobei jeweils ein Betriebszustand durch eine Einstellung der Stellglieder und durch einen Betätigungszustand der Bedienelemente gegeben ist,
- daß der Mikrocomputer (53) derart ausgebildet ist, daß er bei Betätigung eines Bedienelementes einen Suchvorgang in der Tabelle (F1) durchführt, bei dem die in der Tabelle (F1) aufgeführten Betriebszustände als Sollwerte mit dem tatsächlich vorhandenen Betriebszustand als Istwert verglichen werden,
- daß der Mikrocomputer (53) nach erfolgreichem Suchvorgang die gefundene Startinformation der Tabelle entnimmt und
- daß der Mikrocomputer (53) ein oder mehrere Programm-Module unter Benutzung der Startinformation ausführt.

2. Einrichtung nach Anspruch 1, dadurch gekennzeichnet, daß die Betriebszustände ferner durch Signale gegeben sind, die beim Betrieb des Gerätes auftreten.

3. Einrichtung nach Anspruch 2, dadurch gekennzeichnet, daß die Betriebszustände unter Berücksichtigung der Signale in einer weiteren Tabelle abgelegt sind.

4. Einrichtung nach Anspruch 1, dadurch gekennzeichnet, daß in der Tabelle (F1) die Betriebszustände durch Nummern gekennzeichnet sind und daß eine weitere Tabelle (Z2) eine Zuordnung der Betriebszustandsnummern zu den Betriebszuständen enthält.

5. Einrichtung nach Anspruch 1, dadurch gekennzeichnet, daß die Tabelle (F1) gegebenenfalls mehrere für die Ausführung eines oder mehrerer Programm-Module ursächliche Betriebszustände sowie die Art der logischen Verknüpfung der Betriebszustände enthält.

6. Einrichtung nach Anspruch 1, dadurch gekennzeichnet, daß die in der Tabelle (F1) abgelegten Startinformationen Programm-Module, die unmittelbar nach Abschluß des Suchvorgangs ausgeführt werden, und Programm-Module, welche weitere zur Steuerung der Stellglieder erforderliche Prüfungen einleiten, betreffen.

7. Einrichtung nach Anspruch 1, dadurch gekennzeichnet, daß die Startinformation in der Tabelle (F1) jeweils eine Programm-Modul-Nummer ist und daß die Zuordnung der Programm-Modul-Nummern zu Anfangsadressen der Programm-Module in einer weiteren Tabelle (Z3) abgelegt sind.

8. Einrichtung nach Anspruch 1, dadurch gekennzeichnet, daß gleichartige Tasten-Programm-Module zu Gruppen zusammengefaßt werden, daß jeder Gruppe ein Ablauf-Code zugeordnet wird und daß in einer weiteren Tabelle (Z4) jeder abgelegten Startinformation der zugehörige Ablauf-Code zugeordnet ist.

9. Einrichtung nach Anspruch 1, dadurch gekennzeichnet, daß in einer weiteren Tabelle (Z1) für jeweils ein Bedienelement (Taste) die Anzahl von zu unterscheidenden Betätigungszeiten, die relative Adresse einer weiteren Tabelle (Z6) mit vorgesehenen Betätigungszeiten und die relative Adresse zu einer anderen Tabelle (Z4) für eine von dem jeweils betätigten Bedienelement abhängige Folge von auszuführenden Programm-Modulen abgelegt sind.

10. Einrichtung nach Anspruch 1, dadurch gekennzeichnet, daß Tasten-Programm-Module in Abhängigkeit von Vergleichen der in einer weiteren Tabelle (F2) enthaltenen Ablauf-Code-Kombinationen mit einer in einem Schreib-Lese-Speicher des Mikrocomputers stehenden entsprechenden Kombination ausgeführt werden.

11. Einrichtung nach Anspruch 10, dadurch gekennzeichnet, daß zulässige Ablauf-Code-Kombinationen, die in der weiteren Tabelle (F2) erfaßt sind, eine gleichzeitige und überschneidende Ausführung von Tasten-Programm-Modulen ermöglichen.

## Claims

1. Device for controlling a telecommunications apparatus, preferably a car radio, having a microcomputer (53), a memory (56), a control part (52) having control elements and having actuators, the microcomputer (53) being designed to use a program stored in the memory (56) to acquire the position of the control elements and to control the corresponding functions of the device (51), characterized
- in that the program contains a table (Fl) which contains start information items of program modules for controlling the actuators for all possible operating states, a respective operating state being provided by a setting of the actuators and by an actuation state of the control elements,
- in that the microcomputer (53) is designed in such a way that, upon actuation of a control element, it carries out a search operation in the table (Fl), in the case of which the operating states listed in the table (Fl) are compared as desired values with the actually present operating state as actual value,
- in that, following a successful search operation, the microcomputer (53) removes the start information item which has been found from the table, and
- in that the microcomputer (53) executes one or more program modules using the start information item.

2. Device according to Claim 1, characterized in that the operating states are further provided by signals which occur during operation of the apparatus.

3. Device according to Claim 2, characterized in that the operating states are stored in a further table, taking account of the signals.

4. Device according to Claim 1, characterized in that the operating states are identified by numbers in the table (Fl), and in that a further table (Z2) contains an assignment of the operating state numbers to the operating states.

5. Device according to Claim 1, characterized in that the table (Fl) contains, if appropriate, a plurality of operating states which cause the execution of one or more program modules, as well as the type of logic combination of the operating states.

6. Device according to Claim 1, characterized in that the start information items stored in the table (Fl) refer to program modules which are executed immediately after the conclusion of the search operation and to program modules which initiate further checks required for controlling the actuators.

7. Device according to Claim 1, characterized in that the start information item in the table (Fl) is in each case a program module number, and in that the assignment of the program module numbers to start addresses of the program modules is stored in a further table (Z3).

8. Device according to Claim 1, characterized in that identical pushbutton program modules are combined to form groups, in that a sequence code is assigned to each group, and in that the associated sequence code is assigned to each stored start information item in a further table (Z4).

9. Device according to Claim 1, characterized in that a further table (Z1) has stored in it, for a respective control element (pushbutton), the number of actuation times to be distinguished, the relative address of a further table (Z6) having envisaged actuation times, and the relative address for another table (Z4) for a sequence of program modules to be executed which depends on the respectively actuated control element.

10. Device according to Claim 1, characterized in that pushbutton program modules are executed as a function of comparisons of the sequence code combinations contained in a further table (F2) with a corresponding combination residing in a read/write memory of the microcomputer.

11. Device according to Claim 10, characterized in that permissible sequence code combinations which are acquired in the further table (F2) permit simultaneous and overlapping execution of pushbutton program modules.

## Revendications

1. Installation pour commander un appareil de transmission d'informations de préférence un autoradio comprenant un micro-ordinateur (53), une mémoire (56), une pièce de commande (52) avec des éléments de commande et des organes de réglage, le micro-ordinateur (53) étant réalisé pour saisir avec un programme enregistré dans une mémoire (56), la position des éléments de commande et commander de façon appropriée les fonctions correspondantes de l'installation (51),
caractérisée en ce que
- le programme contient un tableau (F1) avec les informations de départ pour les modules de programme pour commander les organes de réglage pour tous les états de fonctionnement possibles, chaque état de fonctionnement étant donné par le réglage des organes de réglage et par un état d'actionnement des éléments de manoeuvre,
- le microprocesseur (53) est réalisé pour qu'à l'actionnement d'un élément de manoeuvre il exécute une opération de recherche dans le tableau (F1) pour laquelle les états de fonctionnement indiqués dans le tableau (Fl) sont comparés comme valeur de consigne aux états de fonctionnement réels comme valeur réelle,
- le microprocesseur (53) reçoit l'information de départ trouvée, dans le tableau si l'opération de recherche a réussi et,
- le microprocesseur (53) exécute un ou plusieurs modules de programme en utilisant l'information de départ.

2. Installation selon la revendication 1,
caractérisée en ce que
les états de fonctionnement sont en outre donnés par des signaux se produisant lors de la mise en oeuvre de l'appareil.

3. Installation selon la revendication 2,
caractérisée en ce que
les états de fonctionnement sont enregistrés dans un autre tableau en tenant compte des signaux.

4. Installation selon la revendication 1,
caractérisée en ce que
les états de fonctionnement sont caractérisés par des numéros dans le tableau (F1) et un autre tableau (Z2) contient une association entre les numéros d'état de fonctionnement et les états de fonctionnement.

5. Installation selon la revendication 1,
caractérisée en ce que
le tableau (F1) contient le cas échéant plusieurs états de fonctionnement d'origine pour l'exécution d'un ou plusieurs modules de programme ainsi que le nombre des combinaisons logiques des états de fonctionnement.

6. Installation selon la revendication 1,
caractérisée en ce que
les modules de programme d'informations de départ enregistrés dans le tableau (F1) et qui sont exécutés directement à la fin de l'opération de recherche et des modules de programme concernent d'autres contrôles nécessaires pour contrôler les organes de réglage.

7. Installation selon la revendication 1,
caractérisée en ce que
l'information de départ dans le tableau (F1) est chaque fois un numéro de module de programme et l'attribution des numéros de modules de programme aux adresses initiales des modules de programme est contenue dans un autre tableau (Z3).

8. Installation selon la revendication 1,
caractérisée en ce que
des modules de programme de touches analogues sont regroupés et chaque groupe se voit attribuer un code de déroulement et dans un autre tableau (Z4), à chaque information de départ, enregistrée est attribué le code de déroulement correspondant.

9. Installation selon la revendication 1,
caractérisée en ce que
dans un autre tableau (Z1), on a enregistré pour chaque fois un élément de manoeuvre (touche) le nombre de durées d'actionnement différentes, l'adresse relative d'un autre tableau (Z6) avec des durées d'actionnement prévues et l'adresse relative pour un autre tableau (Z4) pour une suite de modules de programme à exécuter dépendant des éléments de manoeuvre chaque fois actionnés.

10. Installation selon la revendication 1,
caractérisée en ce que
des modules de programme de touches sont exécutés en fonction de la comparaison des combinaisons de codes de déroulement contenues dans un autre tableau (F2) et d'une combinaison correspondante fournie par une mémoire morte du microprocesseur.

11. Installation selon la revendication 10,
caractérisée en ce que
les combinaisons de codes de déroulement, autorisées, réunies dans l'autre tableau (F2) permettent une exécution simultané et à chevauchement des modules de programme de touches.
